# EUROPEAN PATENT SPECIFICATION

(11) **EP 4 184 175 B1**
(45) Date of publication and mention of the grant of the patent: **10.06.2026**
(21) Application number: 21208669.8
(22) Date of filing: 17.11.2021
(51) Int. Cl.: G01N 35/10

(54) **LABORATORY INSTRUMENT**
LABORGERÄT
INSTRUMENT DE LABORATOIRE

(43) Date of publication of application: 24.05.2023
(73) Proprietor: Roche Diagnostics GmbH, 68305 Mannheim (DE); F. Hoffmann-La Roche AG, 4070 Basel (CH)
(72) Inventor: GUT, Raphael, 6343 Rotkreuz (CH); MEIER, Alexander, 6343 Rotkreuz (CH)
(74) Representative: Altmann Stößel Dick Patentanwälte PartG mbB

(56) References cited:
- EP-B2- 1 092 473
- WO-A1-2007/113561
- WO-A1-2020/159659
- DE-U1- 202013 000 754
- US-A1- 2002 124 627
- US-A1- 2014 182 396

## Description

### Technical Field

The present invention relates to the field of automated in vitro diagnostic (IVD) sample processing. Specifically, the present invention relates to a laboratory instrument and a method for automatic surveillance of at least one pipetting procedure. For example, the method and devices may be used for one or more of analyzing samples of a human body, like blood, urine, saliva, interstitial fluid or other body fluids, tissue section, reagents, system fluids.

### Background art

In diagnostic laboratories, automated pre-analytical, analytical, and post-analytical laboratory instruments are used for various sample processing steps to produce accurate and reliable test results which represent pivotal information for physicians. Typically, such laboratory instruments are equipped with at least one single tube or multiwell plates, sample racks, and reagent racks which are accommodated in dedicated units assembled on a working surface within the laboratory instrument. Such laboratory instruments usually comprise pipetting stations configured for performing pipetting steps such as aspiration, dispensing and the like on one or more of sample, reagent and controls. Known laboratory instruments comprise already means for surveillance. However, it may not possible to monitor all pipetting steps and accuracy may still be a problem.

In diagnostic laboratories, devices and methods for gravimetric volume determination of liquid volumes are known. For example, EP 1 975 578 B1 describes a device for the gravimetric volume determination of liquid volumes. EP 2 166 322 B1 discloses a method for the gravimetric volume determination of liquid volumes in a clinical diagnostic analyzer. US 8,434,345 B2 describes a kit for determining the volume of liquid dispensed by a liquid-dispensing mechanism or the flow of gaseous fluid in the vicinity of a liquid-dispensing mechanism. EP 1 092 473 B2 discloses a device for the gravimetric testing of multi-channel pipettes. DE 10 2013 207 081 B4 describes a testing device for gravimetric testing of a multi-channel pipette with several pipette channels. US 2002/0124627 A1 discloses an apparatus to calibrate multi-channel pipettes by means of a measuring device.

Further, methods and device for determining weights of liquids using balances are known in chemical laboratories. For example, EP 1 099 941 B1 describes a procedure for determining the weights of liquid units delivered by a dispenser, in which at least one liquid unit is delivered on to a pan of a balance and the increase in weight caused thereby is calculated. US 10,197,435 B2 discloses a balance for calibrating pipettes. DE 42 21 732 A1 describes a metering device for dosing pastes and similar slow-flowing materials. DE 603 09 492 T2 discloses a workstation for handling chemicals and vessels, in particular vessels as used in a laboratory, in combination with a dosing system for solids and liquids. EP 1 452 849 B1 describes an apparatus for preparing a solution of a solid with a liquid and/or a dilution of a liquid with another liquid, comprising a balance.

WO2007113561A1 discloses a prior art laboratory instrument.

Despite the advantages achieved by known methods and devices, several technical challenges remain. Specifically, in many systems, surveilling features for surveilling pipetting devices may have a low accuracy. Many systems are limited in their functionality, for example being only restricted to the surveillance of pipetting. Specifically, it may be not possible to monitor all pipetting steps. Moreover, many systems may require special integration qualification and/or operation qualification.

### Problem to be solved

It is therefore desirable to provide methods and devices which at least partially address above-mentioned technical challenges. Specifically, a laboratory instrument and a method for automatic surveillance of at least one pipetting procedure shall be proposed which allow reliable surveillance of pipetting and increasing pipetting accuracy.

### Summary

This problem is addressed by a laboratory instrument and a method for automatic surveillance of at least one pipetting procedure with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect, a laboratory instrument for processing a sample is disclosed.

The term "laboratory instrument" as used herein is a broad term and is to be given its ordinary and customary meaning to a person of ordinary skill in the art and is not to be limited to a special or customized meaning. The term specifically may refer, without limitation, to any device configured for performing sample or sample vessel processing steps. For example, the laboratory instrument may be a clinical diagnostic analyzer.

The laboratory instrument is one or more of a pre-analytical, an analytical, or an post-analytical instrument. A pre-analytical instrument can usually be used for the preliminary processing of samples or sample vessels. An analytical instrument can be designed, for example, to use a sample or part of the sample and a reagent in order to produce a measurable signal, on the basis of which it is possible to determine whether the analyte is present, and if desired in what concentration. A post-analytical instrument can usually be used for the post-processing of samples like the archiving of samples. The laboratory instrument may comprise a pipetting device for pipetting a sample and further devices such as a sorting device for sorting samples or sample vessels, a cap removal device for removing caps or closures on sample vessels, a cap fitting device for fitting caps or closures on sample vessels, an aliquoting device for aliquoting samples, a centrifuging device for centrifuging samples, an analyzing device for analyzing a sample, a heating device for heating a sample, a cooling device for cooling a sample, a mixing device for mixing a sample, a separation device for isolating an analyte of the sample, a storing device for storing samples, an archiving device for archiving samples, a sample vessel type determination device for determining a sample vessel type, a sample quality determination device for determining a sample quality.

The term "sample" as used herein is a broad term and is to be given its ordinary and customary meaning to a person of ordinary skill in the art and is not to be limited to a special or customized meaning. The term specifically may refer, without limitation, to a material suspected of containing an analyte of interest. The sample can be derived from any biological source, such as a biological material including tissue section, and/or physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The sample can be pretreated prior to use, such as preparing plasma from blood, diluting viscous fluids, lysis or the like; methods of treatment can involve filtration, distillation, concentration, inactivation of interfering components, and the addition of reagents. Other samples may be possible such as at least one reagent, or at least one system fluid. A sample may be used directly as obtained from the source or following a pretreatment to modify the character of the sample, e.g. after being diluted with another solution or after having being mixed with reagents e.g. to carry out one or more diagnostic assays like e.g. clinical chemistry assays, immunoassays, coagulation assays, nucleic acid testing, etc.. The term "sample" as used herein is therefore not only used for the original sample but also relates to a sample which has already been processed such as pipetted, diluted, mixed with reagents, enriched, having been purified, having been amplified and the like. As used herein, the term "analyte" may refer to the compound or composition to be detected or measured.

The term "processing a sample" as used herein is a broad term and is to be given its ordinary and customary meaning to a person of ordinary skill in the art and is not to be limited to a special or customized meaning. The term specifically may refer, without limitation, to any treatment of the sample. For example, the processing may comprise one or more of transferring, aliquoting, isolating, purifying, incubating, reacting a sample or combining a reagent with a sample. The term "reagent" as used herein is a broad term and is to be given its ordinary and customary meaning to a person of ordinary skill in the art and is not to be limited to a special or customized meaning. The term specifically may refer, without limitation, to a composition required for treatment of a sample. Reagents may be any liquid, e.g. a solvent or chemical solution, which needs to be mixed with a sample and/or other reagent in order e.g. for a reaction to occur, or to enable detection. A reagent may be for example a diluting liquid, including water, it may comprise an organic solvent, it may comprise a detergent, it may be a buffer. Reagents may also be dry reagents adapted e.g. to be dissolved by a sample, another reagent or a diluting liquid. A reagent in the more strict sense of the term may be a liquid solution containing a reactant, typically a compound or agent capable e.g. of binding to or chemically transforming one or more analytes present in a sample. Examples of reactants are enzymes, enzyme substrates, conjugated dyes, protein-binding molecules, nucleic acid binding molecules, antibodies, chelating agents, promoters, inhibitors, epitopes, antigens, etc..

The laboratory instrument comprises at least one pipetting device comprising at least one pipetting head configured for being coupled to a plurality of pipetting tips. Surveillance of the pipetting head may be performed with or without the pipetting tips coupled to the pipetting head. The laboratory instrument comprises at least one compartment configured for receiving, storing, and/ or releasing at least one sample holder. The pipetting device is configured for performing at least one pipetting procedure on the sample holder. The laboratory instrument comprises at least one sensor unit configured for gravimetric measuring of the sample holder.

The term "pipetting device" as used herein is a broad term and is to be given its ordinary and customary meaning to a person of ordinary skill in the art and is not to be limited to a special or customized meaning. The term specifically may refer, without limitation, to a device or system configured for performing at least one pipetting step comprising at least one transport and/or transfer of liquid or other materials such as dry powder. The pipetting device may be configured for performing at least one pipetting step such as aspiration and/or dispensing. The pipetting device may comprise the pipetting head and at least one pipetting tip or may be connectable to at least one pipetting tip. The pipetting device is configured for performing at least one pipetting procedure on the sample holder. The term "pipetting procedure" as used herein is a broad term and is to be given its ordinary and customary meaning to a person of ordinary skill in the art and is not to be limited to a special or customized meaning. The term specifically may refer, without limitation, to at least one pipetting step and/or a sequence of pipetting steps. The method may comprise monitoring over all pipetting steps.

The pipetting device may be an automated pipetting device. Thus, the pipetting procedure may be performed automatically, e.g. without user interaction. However, the pipetting procedure may comprise steps which require manual action such as loading of consumables.

The term "pipetting head" as used herein is a broad term and is to be given its ordinary and customary meaning to a person of ordinary skill in the art and is not to be limited to a special or customized meaning. The term specifically may refer, without limitation, to at least one mechanical component designed for transport and/or transfer of liquid or other materials such as dry powder. The pipetting head may comprise at least one pump and/or pump system. For example, the pump may be a micro annular gear pump.

The term "pipetting tip" as used herein is a broad term and is to be given its ordinary and customary meaning to a person of ordinary skill in the art and is not to be limited to a special or customized meaning. The term specifically may refer, without limitation, to disposable pipetting tips, which may be used only with a single pipetting process, and reusable pipetting tips, which may be used with more than one pipetting process. Disposable pipetting tips are usually made of plastics and are disposed after the pipetting process. Reusable pipetting tips may be designed as pipetting needles and are usually made of metal or any other material suitable for use with the respective liquids.

The term "coupled to" as used herein is a broad term and is to be given its ordinary and customary meaning to a person of ordinary skill in the art and is not to be limited to a special or customized meaning. The term specifically may refer, without limitation, to a releasable coupling process of a pipetting tip to the pipetting head, e.g. via a coupling unit, as well as a permanent coupling of the pipetting tip to the coupling unit. Regarding the latter case, a pipetting tip may be permanently coupled such as screwed to the coupling unit except for an exchange caused by damage or for maintenance purposes. The pipetting head may either couple disposable pipette tips or may comprise pipetting needles, and which can aspirate and dispense samples and/ or reagents necessary for performing sample processing steps. The pipetting device may have one pipette tip or needle for aspirating and/or dispensing one sample or reagent or a combination thereof. The pipetting device may have multiple pipette tips or needles for aspirating and/or dispensing multiple samples or reagents or a combination thereof at the same time.

The laboratory instrument comprises the compartment configured for receiving, storing, and/ or releasing at least one sample holder. The term "compartment" as used herein is a broad term and is to be given its ordinary and customary meaning to a person of ordinary skill in the art and is not to be limited to a special or customized meaning. The term refers to a dedicated embedded element of a working surface of the laboratory instrument configured for receiving, storing, and/ or releasing the sample holder. The compartment can be manually or automatically loaded/ unloaded with the sample holder. The working surface may comprise further compartments for other consumables such as for pipette tip racks, sample vessel racks, reagent containers, reagent container racks, or reaction vessel racks. As used herein, the term "working surface" is a broad term and is to be given its ordinary and customary meaning to a person of ordinary skill in the art and is not to be limited to a special or customized meaning. The term specifically may refer, without limitation, to a plate mounted within the laboratory instrument which represents the actual surface on which sample, sample vessel, reagent and/ or reagent vessel processing steps of the laboratory instrument are carried out. For this purpose, the working surface is provided with embedded compartments for accommodating consumables, sample processing devices, waste containers, activation devices, and racks which are required for carrying out the sample, sample vessel, reagent and/ or reagent vessel processing steps. The working surface may comprise one single piece and can be made of any suitable material with sufficient rigidity (e.g. metal and/ or plastic). The working surface may have different shapes and forms to meet the requirements of the laboratory instrument. The compartment may comprise a supporting side configured for receiving, storing, and/ or releasing the sample holder. The compartment may comprise an opposite site, also denoted as bottom side.

The sample holder may be or may comprise at least one element designed for receiving and/or storing the sample. The sample holder is a multiwell plate.

The term "multiwell plate" as used herein is a broad term and is to be given its ordinary and customary meaning to a person of ordinary skill in the art and is not to be limited to a special or customized meaning. The term specifically may refer, without limitation, to any plate-shaped device configured to permanently or temporarily store a small amount of the sample, e.g. of a fluid. A small amount in this respect is to be understood as a quantity of fluid in the range of nl to ml such as 10 nl to 100 ml, preferably 0.1 µl to 10 ml and even more preferably 0.1 µl to 5 ml. Basically, the design of the multiwell plate may depend on the respective application of the laboratory instrument. The multiwell plate may be designed as a device for storing a single fluid sample or a plurality of fluid samples. Similarly, the geometry of a respective storage area of the multiwell plate may depend on the respective application of the multiwell plate. The storage area may be designed as a well, channel, depression, recess or the like. For example, the multiwell plate may comprise a plurality of wells. The term "multiwell plate" as used herein may refers to a flat plate with multiple "wells" used as small test tubes. Such a multiwell plate is also known as microtiter plate. The microplate has become a standard tool in analytical research and clinical diagnostic testing laboratories. A very common usage is in the enzyme-linked immunosorbent assay (ELISA), the basis of most modern medical diagnostic testing in humans and animals. A multiwell plate typically has 6, 24, 96, 384 or 1536 sample wells arranged in a 2:3 rectangular matrix. Some microplates have even been manufactured with 3456 or 9600 wells, and an "array tape" product has been developed that provides a continuous strip of microplates embossed on a flexible plastic tape. Each well of a microplate typically holds somewhere between tens of picoliters to several milliliters of liquid. They can also be used to store dry powder or as racks to support glass tube inserts. Wells can be either circular or square. For compound storage applications, square wells with close fitting silicone cap-mats are preferred. Microplates can be stored at low temperatures for long periods, may be heated to increase the rate of solvent evaporation from their wells and can even be heat-sealed with foil or clear film. Microplates with an embedded layer of filter material were also developed, and today, there are microplates for just about every application in life science research which involves filtration, separation, optical detection, storage, reaction mixing, cell culture and detection of antimicrobial activity.

As used herein, the term "single tube" as used herein is a broad term and is to be given its ordinary and customary meaning to a person of ordinary skill in the art and is not to be limited to a special or customized meaning. The term specifically may refer, without limitation, to any tube-shaped device configured to permanently or temporarily store a small amount of the sample, e.g. of a fluid.

The laboratory instrument comprises at least one sensor unit configured for gravimetric measuring of the sample holder. The term "sensor unit" as used herein is a broad term and is to be given its ordinary and customary meaning to a person of ordinary skill in the art and is not to be limited to a special or customized meaning. The term specifically may refer, without limitation, to an arbitrary element configured for one or more of detecting, measuring or monitoring at least one measurement variable or measurement property. Specifically, the sensor unit may be capable of generating at least one signal, denoted as sensor signal, such as a measurement signal, e.g. an electrical signal, which is a qualitative or quantitative indicator of the measurement variable and/or measurement property. The sensor signal may be a raw sensor signal or a preprocessed sensor signal.

The term "gravimetric measurement" as used herein is a broad term and is to be given its ordinary and customary meaning to a person of ordinary skill in the art and is not to be limited to a special or customized meaning. The term specifically may refer, without limitation, to measuring weight. The sensor unit may comprise at least one device for measuring weight. The sensor unit may comprise at least one electronic balance such as a fine balance, a precision balance, an analytical balance, a microbalance. For example, the sensor unit may comprise an analytical balance. The sensor unit may have a resolution, also denoted as reading accuracy, from 0.1 to 10 µg.

The sensor unit may be fixedly installed in the laboratory instrument. The sensor unit may be linked to an instrument software. The instrument software may be designed for providing over the surveillance functionality a feedback or flag to the customer. The term "fixedly installed" as used herein is a broad term and is to be given its ordinary and customary meaning to a person of ordinary skill in the art and is not to be limited to a special or customized meaning. The term specifically may refer, without limitation, to integrated into the laboratory instrument and/or non-exchangeable by a user. The sensor unit may be arranged at a fixed position of the laboratory. The sensor unit may be part of the working surface and/or may be arranged such that it can interact with a specific element of the working surface.

For example, the sensor unit may be arranged below the compartment. The laboratory instrument may comprise a three-dimensional rectangular coordinate system comprising a first direction (also denoted as x-direction), a second direction (also denoted as y-direction), and a third direction (also denoted as z-direction), which are perpendicularly aligned with respect to each other, with the first and second directions (x, y) spanning a plane and the third direction (z) being perpendicularly aligned with respect to the plane. The first and second directions (x, y) can span a horizontal plane and the third direction (z) can be vertically aligned (direction of fall). The horizontal plane may be the plane of the working surface. The compartment of the working surface may be positioned at z=0. The term "below the compartment" as used herein is a broad term and is to be given its ordinary and customary meaning to a person of ordinary skill in the art and is not to be limited to a special or customized meaning. The term specifically may refer, without limitation, to a positive z-coordinate ≠ 0 and/or in direction of fall below the compartment. The sensor unit may be at least partially in contact with the bottom side of the compartment. For example, the sensor unit may comprise a contact point or contact surface for contacting the bottom side of the compartment.

For example, the compartment may be arranged at a preparation pipetting station. The sample holder may be a multiwell plate, e.g. a processing plate. The processing plate may be configured for undergoing at least one sample processing step. The preparation pipetting station may be configured for sample processing. The sample processing may comprise one or more of sample specific steps, aliquoting, centrifuging, heating, cooling, cycling, mixing, washing, elution, diluting, chemical reacting, or the like. The sensor unit may be arranged below the compartment for the multiwell plate at the preparation pipetting station. Using the sensor unit for gravimetric measuring of the multiwell plate at the preparation pipetting station may allow improving monitoring the pipetting procedure in view of higher and more accurate resolution. Using the sensor unit for gravimetric measuring of the multiwell plate at the preparation pipetting station may allow providing a surveillance function for steps of the pipetting procedure for which no surveillance was possible before, e.g. for pipetting controls, or with an accuracy which cannot be achieved with other common surveillance techniques, e.g. pressure based surveillance. Increasing the number of monitorable steps of the pipetting procedure may allow enhancing reliability and may allow calibration, e.g. online calibration during operation of the laboratory instrument. For example, the pipetting device may pipet the samples to the multiwell plate. The sensor unit may allow monitoring of the volume for these processes. For example, the pipetting device may pipet, e.g. after pipetting the samples, controls into the multiwell plate. The sensor unit may allow monitoring of the volume for these processes.

For example, the compartment may be arranged at an amplification and detection (AD) plate pipetting station. The sample holder may be a multiwell plate, e.g. an AD plate. The AD plate may be configured for undergoing at least one preparation at the AD plate pipetting station. After being prepared by the AD plate pipetting station, the AD plate may comprise the sample processed and purified at the end with at least one reagent. The AD plate pipetting station may be configured for preparing the sample having passed the preparation pipetting station for subsequent analysis. The sensor unit may be arranged below the compartment of the AD plate pipetting station. For example, the pipetting device may pipet a plurality of reagents to the AD plate. The sensor unit may allow monitoring of the volume for these processes. For example, the pipetting device may pipet the prepared eluate to the AD plate. The sensor unit may allow monitoring of the volume for this process.

The laboratory instrument may comprise at least one control unit configured for receiving and evaluating at least one sensor signal from the sensor unit and for providing at least one information about the pipetting procedure using the sensor signal. The control unit may be configured for monitoring at least one pipetting step by evaluating the sensor signal from the sensor unit. The control unit may be configured for online monitoring and/or for surveillance of the pipetting procedure. The control unit may be configured for online monitoring and/or for surveillance of the pipetting procedure by monitoring weight of the compartment.

The term "control unit" as used herein is a broad term and is to be given its ordinary and customary meaning to a person of ordinary skill in the art and is not to be limited to a special or customized meaning. The term specifically may refer, without limitation, to an arbitrary device or system configured for performing the named operations, preferably by using at least one data processing device and, more preferably, by using at least one processor and/or at least one application-specific integrated circuit. Thus, as an example, the at least one control unit may comprise at least one data processing device having a software code stored thereon comprising a number of computer commands. The control unit may provide one or more hardware elements for performing one or more of the named operations and/or may provide one or more processors with software running thereon for performing one or more of the named operations. The control unit may comprise one or more programmable devices such as one or more computers, application-specific integrated circuits (ASICs), Digital Signal Processors (DSPs), or Field Programmable Gate Arrays (FPGAs). Additionally or alternatively, however, the control unit may also fully or partially be embodied by hardware.

The term "processor" or "processing device" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math co-processor or a numeric co-processor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) and/or one or more tensor processing unit (TPU) and/or one or more chip, such as a dedicated machine learning optimized chip, or the like. The processor specifically may be configured, such as by software programming, for performing one or more evaluation operations.

The term "evaluating" as used herein is a broad term and is to be given its ordinary and customary meaning to a person of ordinary skill in the art and is not to be limited to a special or customized meaning. The term specifically may refer, without limitation, to an application of methods for processing the sensor signal and deriving at least one representative result therefrom. The sensor signal may be or comprise at least one electronic signal, such as at least one voltage signal and/or at least one current signal. The sensor signal may be or may comprise at least one analogue signal and/or may be or may comprise at least one digital signal. The evaluation may comprise deriving information about weight and/or information about a volume from the sensor signal. The term "information about the pipetting procedure" as used herein is a broad term and is to be given its ordinary and customary meaning to a person of ordinary skill in the art and is not to be limited to a special or customized meaning. The term specifically may refer, without limitation, to an arbitrary information about at least one parameter influencing the pipetting procedure. The information about the pipetting procedure may relate or may be derivable from the information about weight and/or information about a volume. For example, the information about the pipetting procedure may be one or more of information about volume transferred to or from the sample holder, information about evaporation, information about a consumable, such as presence or absence.

For example, the sensor unit can be used for detecting evaporation. The sensor unit may be configured for detecting the weight of the sample holder at at least two different time points. The control unit may be configured for determining a weight difference between the weight of the sample holder at the two different time points by evaluating the sensor signals generated by the sensor unit at the two different time points. The weight difference may be a measure for evaporation.

For example, the sensor unit can be used for detecting only the consumable. This may allow omitting an extra sensor usually used for detection of the consumable and, thus, to save costs. For example, the control unit may be configured for determining presence of the sample holder by evaluating the sensor signal from the sensor unit.

For example, the control unit may be configured for determining a pump delivery rate for the pump of the pipetting head by evaluating the sensor signal from the sensor unit. The pump delivery rate may refer to a dispensed weight. The pump delivery rate may comprise an integral value, e.g. a transferred weight.

The control unit may be configured for executing at least one action in case the sensor signal deviates from an expected value. For example, the control unit may be configured for comparing the sensor signal and/or the information derived therefrom to at least one threshold. For example, the threshold may be an allowable deviation, e.g. more than 10 % from an expected value. For example, the control unit may be designed for flagging the result in case the sensor signal deviates from an expected value, e.g. with an error or warning message. The threshold may be set via software and/or protocol can be set for each pipetting step to a different value or range. The action may comprise one or more of flagging, issuing at least one warning, issuing at least one request e.g. insertion of multiwell plate required, no reagent present or the like, or amending at least one process parameter influencing the pipetting procedure. For example, the action may be flagging the result. For example, the action may comprise issuing a warning that the sample could not be transferred, e.g. due to faulty liquid level detection, such as foam on sample, or clots in the sample material which clogged the pipet tip. For example, the process parameter may be the pump delivery rate. This may allow adapting or recalibrating the pump delivery rate continuously. For example, in case a customer has at least one flag, specifically a plurality of flags, a service field engineer may be informed. In this case, a recalibration may be necessary or a new pump. The flagged results may also further specify problem reports such as "Where is the issue?", "Is it a defect pump?", "We have to change the supplier?" and the like.

The control unit may be configured for executing the action via at least one communication interface and/or user interface. The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. The communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may specifically provide means for transferring or exchanging information. In particular, the communication interface may provide a data transfer connection, e.g. Bluetooth, NFC, inductive coupling or the like. As an example, the communication interface may be or may comprise at least one port comprising one or more of a network or internet port, a USB-port and a disk drive. The communication interface may be at least one web interface. The term "user interface" as used herein is a broad term and is to be given its ordinary and customary meaning to a person of ordinary skill in the art and is not to be limited to a special or customized meaning. The term may refer, without limitation, to a feature of the laboratory instrument which is configured for interacting with its environment, such as for the purpose of unidirectionally or bidirectionally exchanging information, such as for exchange of one or more of data or commands. For example, the user interface may be configured to share information with a user and to receive information by the user. The user interface may be a feature to interact visually with a user, such as a display, or a feature to interact acoustically with the user. The user interface, as an example, may comprise one or more of: a graphical user interface; a data interface, such as a wireless and/or a wire-bound data interface.

The sensor unit may be used for installation qualification (IQ) and/or operational qualification (OQ). IQ and/or OQ may be tests after assembling of the laboratory instrument. For example, the IQ and/or QQ may be performed at the manufacturer's site or at the costumer's site. Operations or the service field engineer may test the instrument, specifically the pipetting system. The tests may be implemented as process steps in a service software. The target may be to create a quality document for the customer. The sensor unit may be used for the IQ and/or OQ and/or during sample preparation for the real-time monitoring of the laboratory instrument.

In a further aspect a method for automatic surveillance of at least one pipetting procedure of at least one laboratory instrument for processing a sample according to the present invention is disclosed. The method steps may be performed in the given order or may be performed in a different order. Further, one or more additional method steps may be present which are not listed. Further, one, more than one or even all of the method steps may be performed repeatedly.

For details, options and definitions, reference may be made to the laboratory instrument as discussed above. Thus, specifically, as outlined above, the method may comprise using the laboratory instrument according to the present invention, such as according to one or more of the embodiments given above or given in further detail below.

The term "automatic" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or machine, in particular without manual action and/or interaction with a user. The method may be computer-implemented. The method may, however, comprise manual action such as loading of consumables and the like.

The method comprises the following steps:
a) performing at least one pipetting procedure comprising at least one pipetting step on at least one sample holder by using the pipetting device;
b) gravimetric measuring of the sample holder by using at least one sensor unit.

The method may comprise receiving and evaluating at least one sensor signal from the sensor unit and providing at least one information about the pipetting procedure using the sensor signal by using at least one control unit. The method may comprise, by using the control unit, executing at least one action in case the sensor signal deviates from an expected value, wherein the action comprises one or more of flagging, issuing at least one warning, issuing at least one request, or amending at least one process parameter influencing the pipetting procedure. For example, the method may comprise issuing at least one warning and/or at least one action influencing the operation of the laboratory instrument. For example, the action can be a hard stop for the laboratory instrument, e.g. in case of too much volume was pipetted. The action can save the laboratory instrument from overflow. For example, in case no consumable is detected, the action may be starting the run from the customer.

Further disclosed and proposed herein is a computer program including computer-executable instructions for performing the method according to the present invention in one or more of the embodiments enclosed herein when the program is executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) and b) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

The invention is defined by a laboratory instrument according to claim 1 and a method according to claim 12. Further aspects of the invention are detailed in the dependent claims.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1A and 1B: show a first embodiment of a laboratory instrument for processing a sample in a perspective view;
- Figures 2A and 2B: shows a second embodiment of a laboratory instrument for processing a sample in a perspective view;
- Figure 3: shows a third embodiment of a laboratory instrument for processing a sample in a schematic view; and
- Figure 4: shows a flow chart of an embodiment of a method for automatic surveillance of at least one pipetting procedure of at least one laboratory instrument.

### Detailed description of the embodiments

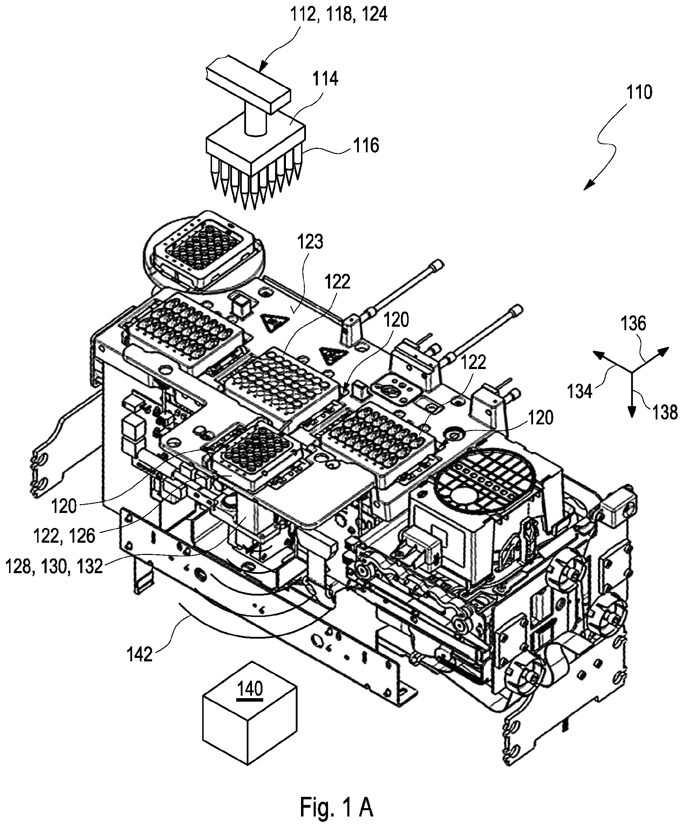

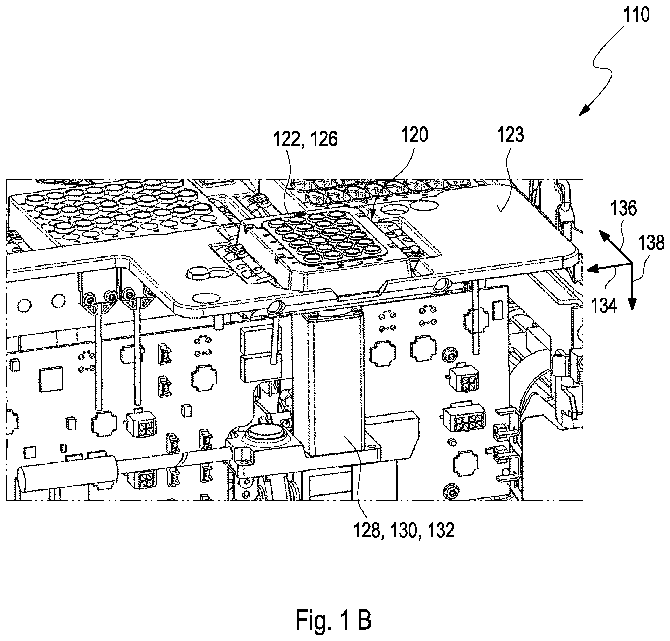

Figures 1A and 1B show a first exemplary embodiment of a laboratory instrument 110 for processing a sample in a perspective view. Specifically, Figure 1B shows a detailed view of the laboratory system 110 of Figure 1A. The laboratory instrument 110 comprises at least one pipetting device 112 comprising at least one pipetting head 114 configured for being coupled to a plurality of pipetting tips 116. The pipetting device 112 may be an automated pipetting device 118. Thus, the pipetting procedure may be performed automatically, e.g. without user interaction. However, the pipetting procedure may comprise steps which require manual action such as loading of consumables.

The laboratory instrument 110 comprises at least one compartment 120 configured for receiving, storing, and/ or releasing at least one sample holder, e.g. a multiwell plate 122 or a single tube or the like. In the following, reference is made to a multiwell plate, however, as a non-limiting example. The pipetting device 112 is configured for performing at least one pipetting procedure on the multiwell plate 122. The at least one compartment 120 may be a dedicated embedded element of a working surface 123 of the laboratory instrument 110 configured for receiving, storing, and/ or releasing the multiwell plate 122. In the exemplary embodiment shown in Figures 1A and 1B, the compartment 120 may be arranged at an amplification and detection (AD) plate pipetting station 124. The multiwell plate 122 may be an AD plate 126. The AD plate 126 may be configured for undergoing at least one preparation at the AD plate pipetting station 124. After being prepared by the AD plate pipetting station 124, the AD plate 126 may comprise the sample processed and purified at the end with at least one reagent. The AD plate pipetting station 124 may be configured for preparing the sample having passed a preparation pipetting station for subsequent analysis.

Further, the laboratory instrument 110 comprises at least one sensor unit 128 configured for gravimetric measuring of the multiwell plate 122. The sensor unit 128 may comprise at least one device for measuring weight 130. In the exemplary embodiment shown in Figures 1A and 1B, the sensor unit 128 may comprise at least one electronic balance 132 such as a fine balance, a precision balance, an analytical balance, a microbalance. The sensor unit 128 may have a resolution, also denoted as reading accuracy, from 0.1 to 10 µg.

As can be seen best in Figure 1B, the sensor unit 128 may be fixedly installed in the laboratory instrument 110 and may be arranged below the compartment 120. The laboratory instrument 110 may comprise a three-dimensional rectangular coordinate system comprising a first direction (also denoted as x-direction) 134, a second direction (also denoted as y-direction) 136, and a third direction (also denoted as z-direction) 138, which are perpendicularly aligned with respect to each other, with the first and second directions (x, y) 134, 136 spanning a plane and the third direction (z) 138 being perpendicularly aligned with respect to the plane. The first and second directions (x, y) 134, 136 can span a horizontal plane and the third direction (z) 138 can be vertically aligned (direction of fall). The horizontal plane may be the plane of the working surface 123. The compartment 120 of the working surface 123 may be positioned at z=0. The sensor unit 128 may be arranged at a positive z-coordinate ≠ 0 and/or in direction of fall below the compartment 120. The sensor unit 128 may be at least partially in contact with a bottom side of the compartment 120. For example, the sensor unit 128 may comprise a contact point or contact surface for contacting the bottom side of the compartment 120.

Specifically, in the exemplary embodiment of Figures 1A and 1B, the sensor unit 128 may be arranged below the compartment 120 of the AD plate pipetting station 124. For example, the pipetting device 112 may pipet a plurality of reagents to the AD plate 126. The sensor unit 128 may allow monitoring of the volume for these processes. For example, the pipetting device 112 may pipet the prepared eluate to the AD plate 126. The sensor unit 128 may allow monitoring of the volume for this process.

As shown in Figure 1A, the laboratory instrument 110 may comprise at least one control unit 140 configured for receiving and evaluating at least one sensor signal 142 from the sensor unit 128 and for providing at least one information about the pipetting procedure using the sensor signal 142. The control unit 140 may be configured for monitoring at least one pipetting step by evaluating the sensor signal 142 from the sensor unit 128. The control unit 140 may be configured for online monitoring and/or for surveillance of the pipetting procedure. The control unit 140 may be configured for online monitoring and/or for surveillance of the pipetting procedure by monitoring weight of the compartment 120.

For example, the control unit 140 may be configured for determining presence of the multiwell plate 122 by evaluating the sensor signal 142 from the sensor unit 128. For example, the control unit 140 is configured for determining a pump delivery rate for the pump of the pipetting head 114 by evaluating the sensor signal 142 from the sensor unit 128.

The control unit 140 may be configured for executing at least one action in case the sensor signal 142 deviates from an expected value. For example, the control unit 140 may be configured for comparing the sensor signal 142 and/or the information derived therefrom to at least one threshold. For example, the threshold may be an allowable deviation, e.g. more than 10 % from an expected value. For example, the control unit may be designed for flagging the result in case the sensor signal deviates from an expected value, e.g. with an error or warning message. The threshold may be set via software and/or protocol can be set for each pipetting step to a different value or range. The action may comprise one or more of flagging, issuing at least one warning, issuing at least one request e.g. insertion of multiwell plate 122 required, no reagent present or the like, or amending at least one process parameter influencing the pipetting procedure. For example, the action may be flagging the result. For example, the action may comprise issuing a warning that the sample could not be transferred, e.g. due to faulty liquid level detection, such as foam on sample, or clots in the sample material which clogged the pipet tip. For example, the process parameter may be the pump delivery rate. This may allow adapting or recalibrating the pump delivery rate continuously. The control unit 140 may be configured for executing the action via at least one communication interface and/or user interface (not shown in the Figures). For example, in a customer has at least one flag, specifically a plurality of flags, a service field engineer may be informed. In this case, a recalibration may be necessary or a new pump. The flagged results may give further specify problem reports such as "Where is the issue?", "Is it a defect pump?", "We have to change the supplier?" and the like.

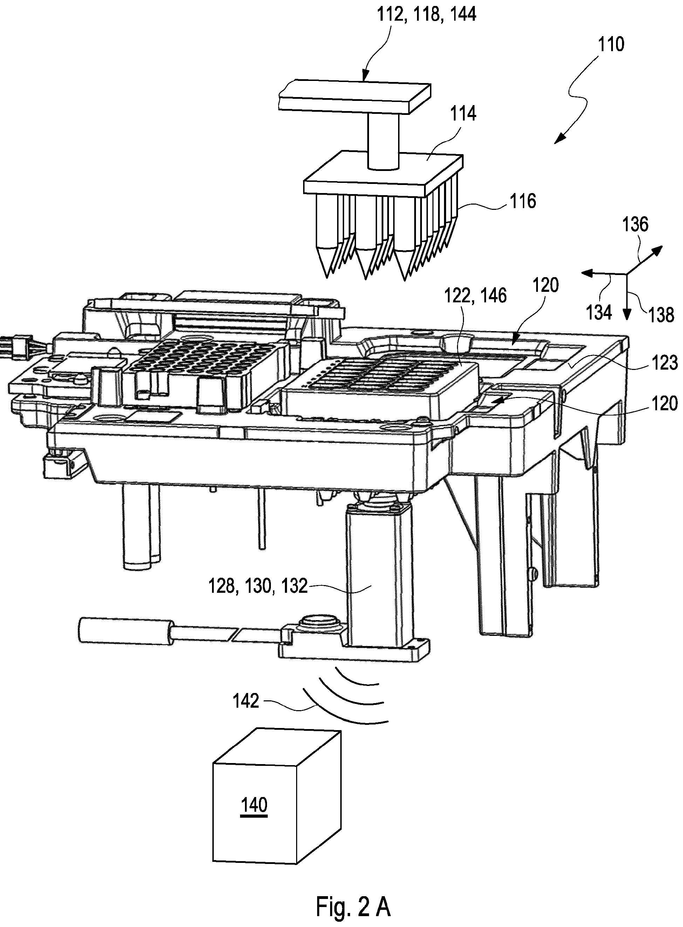

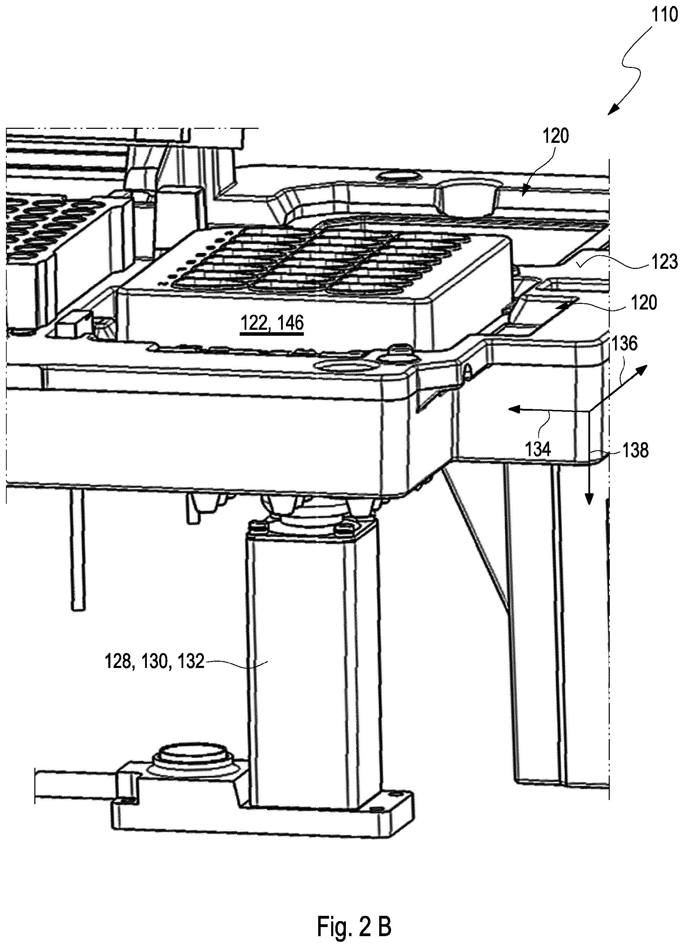

In Figures 2A and 2B, a second exemplary embodiment of the laboratory instrument 110 for processing a sample is shown in a perspective view. Specifically, Figure 2B shows a detailed view of the laboratory system 110 of Figure 2A. The embodiment of the laboratory instrument 110 shown in Figures 2A and 2B may widely correspond to the embodiment of the laboratory instrument 110 shown in Figures 1A and 1B. Thus, for the description of Figures 2A and 2B, reference is made to the description of Figures 1A and 1B.

In the exemplary embodiment of Figures 2A and 2B, the compartment 120 may be arranged at a preparation pipetting station 144. The multiwell plate 122 may be a processing plate 146 or a tube. The processing plate 146 may be configured for undergoing at least one sample processing step. The preparation pipetting station 144 may be configured for sample processing. The sample processing may comprise one or more of sample specific steps, aliquoting, centrifuging, heating, cooling, cycling, mixing, washing, elution, diluting, chemical reacting, or the like. The sensor unit 128 may be arranged below the compartment 120 for the multiwell plate 122 at the preparation pipetting station 144. Using the sensor unit 128 for gravimetric measuring of the multiwell plate 122 at the preparation pipetting station 144 may allow improving monitoring the pipetting procedure in view of higher and more accurate resolution. Using the sensor unit 128 for gravimetric measuring of the multiwell plate 122 at the preparation pipetting station 144 may allow providing a surveillance function for steps of the pipetting procedure for which no surveillance was possible before, e.g. for pipetting controls, or with an accuracy which cannot be achieved with other common surveillance techniques, e.g. pressure based surveillance. Increasing the number of monitorable steps of the pipetting procedure may allow enhancing reliability and may allow calibration, e.g. online calibration during operation of the laboratory instrument 110. For example, the pipetting device 112 may pipet the samples to the multiwell plate 122. The sensor unit 128 may allow monitoring of the volume for these processes. For example, the pipetting device 112 may pipet, e.g. after pipetting the samples, controls into the multiwell plate 122. The sensor unit 128 may allow monitoring of the volume for these processes.

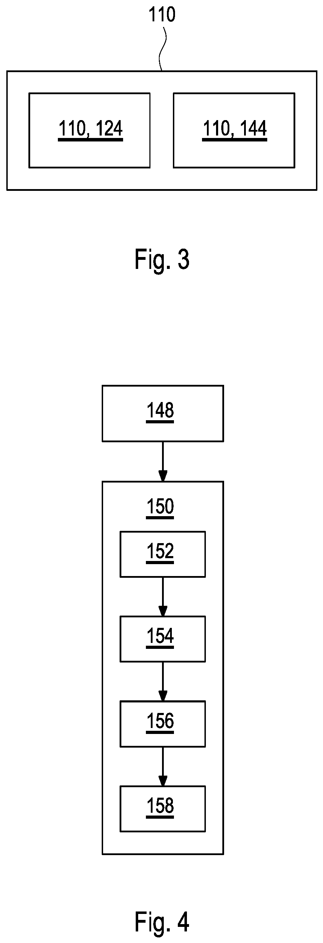

Figure 3 shows a third embodiment of the laboratory instrument 110 for processing a sample in a schematic view. As shown in Figure 3, the laboratory instrument 110 may comprise a laboratory instrument 110 with the AD plate pipetting station 124, as exemplarily shown in Figures 1A and 1B, and, additionally, another laboratory instrument 110 with the preparation pipetting station 144, as exemplarily shown in Figures 2A and 2B. Further laboratory instruments 110 are also feasible.

Figure 4 shows a flow chart of an embodiment of a method for automatic surveillance of at least one pipetting procedure of the at least one laboratory instrument 110 for processing a sample according to the present invention, such as according to any one of the embodiments shown in Figures 1A to 2B and/or according to any other embodiment disclosed herein. The method steps may be performed in the given order or may be performed in a different order. Further, one or more additional method steps may be present which are not listed. Further, one, more than one or even all of the method steps may be performed repeatedly.

The method comprises the following steps:
a) (denoted by reference number 148) performing at least one pipetting procedure comprising at least one pipetting step on the at least one multiwell plate 122 by using the pipetting device 112;
b) (denoted by reference number 150) gravimetric measuring of the multiwell plate 122 by using the at least one sensor unit 128.

The method may comprise receiving and evaluating the at least one sensor signal 142 from the sensor unit 128 (denoted by reference numbers 152 and 154) and providing at least one information about the pipetting procedure using the sensor signal 142 by using the at least one control unit 140 (denoted by reference number 156). The method may comprise, by using the control unit 140, executing at least one action (denoted by reference number 158) in case the sensor signal 142 deviates from an expected value, wherein the action comprises one or more of flagging, issuing at least one warning, issuing at least one request, or amending at least one process parameter influencing the pipetting procedure.

### List of reference numbers

- 110: laboratory instrument
- 112: pipetting device
- 114: pipetting head
- 116: plurality of pipetting tips
- 118: automated pipetting device
- 120: compartment
- 122: sample holder, e.g. multiwell plate
- 123: working surface
- 124: AD plate pipetting station
- 126: AD plate
- 128: sensor unit
- 130: device for measuring weight
- 132: electronic balance
- 134: first direction
- 136: second direction
- 138: third direction
- 140: control unit
- 142: sensor signal
- 144: preparation pipetting station
- 146: processing plate
- 148: performing at least one pipetting procedure
- 150: gravimetric measuring of the multiwell plate
- 152: receiving at least one sensor signal
- 154: evaluating at least one sensor signal
- 156: providing at least one information about the pipetting procedure
- 158: executing at least one action

## Claims

1. A laboratory instrument (110) for processing a sample, wherein the laboratory instrument (110) is one or more of a pre-analytical, an analytical, or a postanalytical instrument, wherein the laboratory instrument (110) comprises at least one pipetting device (112) comprising at least one pipetting head (114) configured for being coupled to a plurality of pipetting tips (116), wherein the laboratory instrument (110) comprises at least one compartment (120) configured for receiving, storing, and/or releasing at least one sample holder (122), wherein the sample holder (122) is a multiwell plate, wherein the compartment (120) is a dedicated embedded element of a working surface (123) of the laboratory instrument (110), wherein the pipetting device (112) is configured for performing at least one pipetting procedure on the sample holder (122), wherein the laboratory instrument (110) comprises at least one sensor unit (128) configured for gravimetric measuring of the sample holder (122), wherein the sensor unit (128) is arranged below the compartment (120).

2. The laboratory instrument (110) according to the preceding claim, wherein the laboratory instrument (110) comprises at least one control unit (140) configured for receiving and evaluating at least one sensor signal (142) from the sensor unit (128) and for providing at least one information about the pipetting procedure using the sensor signal (142).

3. The laboratory instrument (110) according to the preceding claim, wherein the control unit (140) is configured for executing at least one action in case the sensor signal (142) deviates from an expected value, wherein the action comprises one or more of flagging a result in case the sensor signal deviates from the expected value with an error or warning message, issuing at least one warning, issuing at least one request, wherein the request comprises an insertion of multiwell plate required or no reagent present, or amending at least one process parameter influencing the pipetting procedure, wherein the process parameter is a pump delivery rate.

4. The laboratory instrument (110) according to any of the two preceding claims, wherein the control unit (140) is configured for monitoring at least one pipetting step by evaluating the sensor signal (142) from the sensor unit (128).

5. The laboratory instrument (110) according to any of the three preceding claims, wherein the control unit (140) is configured for determining presence of the sample holder (122) by evaluating the sensor signal (142) from the sensor unit (128).

6. The laboratory instrument (110) according to any of the three preceding claims, wherein the control unit (140) is configured for determining a pump delivery rate for a pump of the pipetting head (114) by evaluating the sensor signal (142) from the sensor unit (128).

7. The laboratory instrument (110) according to any of the preceding claims, wherein the sensor unit (128) comprises at least one device for measuring weight (130).

8. The laboratory instrument (110) according to the preceding claim, wherein the sensor unit (128) comprises at least one electronic balance (132) such as a fine balance, a precision balance, an analytical balance, a microbalance.

9. The laboratory instrument (110) according to any of the preceding claims, wherein the sensor unit is (128) fixedly installed in the laboratory instrument (110).

10. The laboratory instrument (110) according to any of the preceding claims, wherein the compartment (120) is arranged at a preparation pipetting station (144), wherein the preparation pipetting station (144) is configured for sample processing, wherein the sensor unit (128) is arranged below the compartment (120) for the sample holder (122) at the preparation pipetting station (144).

11. The laboratory instrument (110) according to any of the preceding claims, wherein the compartment (120) is arranged at an amplification and detection plate pipetting station (124), wherein the amplification and detection plate pipetting station (124) is configured for preparing the sample having passed the preparation pipetting station (144) for subsequent analysis, wherein the sensor unit (128) is arranged below the compartment (120) of the amplification and detection plate pipetting station (124).

12. A method for automatic surveillance of at least one pipetting procedure of at least one laboratory instrument (110) for processing a sample according to any one of the preceding claims, wherein the method comprises the following steps:
a) performing at least one pipetting procedure comprising at least one pipetting step on at least one sample holder (122) by using the pipetting device (112);
b) gravimetric measuring of the sample holder (122) by using at least one sensor unit (128).

13. The method according to the preceding claim, wherein the method comprises receiving and evaluating at least one sensor signal (142) from the sensor unit (128) and providing at least one information about the pipetting procedure using the sensor signal (142) by using at least one control unit (140).

14. The method according to the preceding claims, wherein the method comprises, by using the control unit (140), executing at least one action in case the sensor signal (142) deviates from an expected value, wherein the action comprises one or more of flagging a result in case the sensor signal deviates from the expected value with an error or warning message, issuing at least one warning, issuing at least one request, wherein the request comprises an insertion of multiwell plate required or no reagent present, or amending at least one process parameter influencing the pipetting procedure, wherein the process parameter is a pump delivery rate.

## Patentansprüche

1. Laborgerät (110) zum Verarbeiten einer Probe, wobei das Laborgerät (110) eines oder mehrere aus einem präanalytischen, einem analytischen oder einem postanalytischen Instrument ist, wobei das Laborinstrument (110) mindestens eine Pipettiervorrichtung (112) umfasst, die mindestens einen Pipettierkopf (114) umfasst, der konfiguriert ist, um mit einer Vielzahl von Pipettierspitzen (116) gekoppelt zu werden, wobei das Laborinstrument (110) mindestens eine Kammer (120) umfasst, die konfiguriert ist, um mindestens einen Probenhalter (122) aufzunehmen, zu lagern und/oder freizugeben, wobei der Probenhalter (122) eine Multiwell-Platte ist, wobei die Kammer (120) ein dediziertes eingebettetes Element einer Arbeitsfläche (123) des Laborinstruments (110) ist, wobei die Pipettiervorrichtung (112) konfiguriert ist, um mindestens einen Pipettiervorgang an dem Probenhalter (122) durchzuführen, wobei das Laborinstrument (110) mindestens eine Sensoreinheit (128) umfasst, die zur gravimetrischen Messung des Probenhalters (122) konfiguriert ist, wobei die Sensoreinheit (128) unter der Kammer (120) angeordnet ist.

2. Laborgerät (110) nach dem vorhergehenden Anspruch, wobei das Laborgerät (110) mindestens eine Steuereinheit (140) umfasst, konfiguriert zum Empfangen und Auswerten mindestens eines Sensorsignals (142) von der Sensoreinheit (128) und zum Bereitstellen mindestens einer Information über den Pipettiervorgang unter Verwendung des Sensorsignals (142).

3. Laborgerät (110) nach dem vorhergehenden Anspruch, wobei die Steuereinheit (140) konfiguriert ist, um mindestens eine Aktion auszuführen, falls das Sensorsignal (142) von einem erwarteten Wert abweicht, wobei die Aktion eines oder mehrere aus Folgenden umfasst: Markieren eines Ergebnisses, falls das Sensorsignal von dem erwarteten Wert abweicht, mit einem Fehler oder einer Warnmeldung, Ausgeben mindestens einer Warnung, Ausgeben mindestens einer Anforderung, wobei die Anforderung eine Einführung einer erforderlichen Multiwell-Platte oder kein vorhandenes Reagenz umfasst, oder Ändern mindestens eines Prozessparameters, der den Pipettiervorgang beeinflusst, wobei der Prozessparameter eine Pumpenförderrate ist.

4. Laborgerät (110) nach einem der zwei vorhergehenden Ansprüche, wobei die Steuereinheit (140) konfiguriert ist, um mindestens einen Pipettierschritt durch Auswerten des Sensorsignals (142) von der Sensoreinheit (128) zu überwachen.

5. Laborgerät (110) nach einem der drei vorhergehenden Ansprüche, wobei die Steuereinheit (140) konfiguriert ist, um das Vorhandensein des Probenhalters (122) durch Auswerten des Sensorsignals (142) von der Sensoreinheit (128) zu bestimmen.

6. Laborgerät (110) nach einem der drei vorhergehenden Ansprüche, wobei die Steuereinheit (140) konfiguriert ist, um eine Pumpenförderrate für eine Pumpe des Pipettierkopfs (114) durch Auswerten des Sensorsignals (142) von der Sensoreinheit (128) zu bestimmen.

7. Laborgerät (110) nach einem der vorhergehenden Ansprüche, wobei die Sensoreinheit (128) mindestens eine Vorrichtung zum Messen des Gewichts (130) umfasst.

8. Laborgerät (110) nach dem vorhergehenden Anspruch, wobei die Sensoreinheit (128) mindestens eine elektronische Waage (132), wie z.B. eine Feinwaage, eine Präzisionswaage, eine Analysewaage, eine Mikrowaage, umfasst.

9. Laborgerät (110) nach einem der vorhergehenden Ansprüche, wobei die Sensoreinheit (128) fest in dem Laborgerät (110) installiert ist.

10. Laborgerät (110) nach einem der vorhergehenden Ansprüche, wobei die Kammer (120) an einer Vorbereitungspipettierstation (144) angeordnet ist, wobei die Vorbereitungspipettierstation (144) zur Probenverarbeitung konfiguriert ist, wobei die Sensoreinheit (128) unterhalb der Kammer (120) für den Probenhalter (122) an der Vorbereitungspipettierstation (144) angeordnet ist.

11. Laborgerät (110) nach einem der vorhergehenden Ansprüche, wobei die Kammer (120) an einer Amplifikations- und Detektionsplatten-Pipettierstation (124) angeordnet ist, wobei die Amplifikations- und Detektionsplatten-Pipettierstation (124) konfiguriert ist, um die Probe, die die Vorbereitungspipettierstation (144) passiert hat, zur anschließenden Analyse vorzubereiten, wobei die Sensoreinheit (128) unterhalb der Kammer (120) der Amplifikations- und Detektionsplatten-Pipettierstation (124) angeordnet ist.

12. Verfahren zur automatischen Überwachung mindestens eines Pipettiervorgangs mindestens eines Laborgeräts (110) zum Verarbeiten einer Probe nach einem der vorhergehenden Ansprüche, wobei das Verfahren die folgenden Schritte umfasst:
a) Durchführen mindestens eines Pipettiervorgangs, umfassend mindestens einen Pipettierschritt an mindestens einem Probenhalter (122) unter Verwendung der Pipettiervorrichtung (112);
b) gravimetrisches Messen des Probenhalters (122) unter Verwendung mindestens einer Sensoreinheit (128).

13. Verfahren nach dem vorhergehenden Anspruch, wobei das Verfahren das Empfangen und Auswerten mindestens eines Sensorsignals (142) von der Sensoreinheit (128) und das Bereitstellen mindestens einer Information über den Pipettiervorgang unter Verwendung des Sensorsignals (142) unter Verwendung mindestens einer Steuereinheit (140) umfasst.

14. Verfahren nach den vorhergehenden Ansprüchen, wobei das Verfahren das Ausführen mindestens einer Aktion unter Verwendung der Steuereinheit (140) umfasst, falls das Sensorsignal (142) von einem erwarteten Wert abweicht, wobei die Aktion eines oder mehrere aus Folgenden umfasst: Markieren eines Ergebnisses, falls das Sensorsignal von dem erwarteten Wert abweicht, mit einem Fehler oder einer Warnmeldung, Ausgeben mindestens einer Warnung, Ausgeben mindestens einer Anforderung, wobei die Anforderung eine Einführung einer erforderlichen Multiwell-Platte oder kein vorhandenes Reagenz umfasst, oder Ändern mindestens eines Prozessparameters, der den Pipettiervorgang beeinflusst, wobei der Prozessparameter eine Pumpenförderrate ist.

## Revendications

1. Instrument de laboratoire (110) pour le traitement d'un échantillon, dans lequel l'instrument de laboratoire (110) est un ou plusieurs parmi un instrument pré-analytique, analytique ou post-analytique, dans lequel l'instrument de laboratoire (110) comprend au moins un dispositif de pipetage (112) comprenant au moins une tête de pipetage (114) configurée pour être accouplée à une pluralité de pointes de pipetage (116), dans lequel l'instrument de laboratoire (110) comprend au moins un compartiment (120) configuré pour recevoir, stocker et/ou libérer au moins un porte-échantillons (122), dans lequel le porte-échantillons (122) est une plaque multipuits, dans lequel le compartiment (120) est un élément intégré dédié d'une surface de travail (123) de l'instrument de laboratoire (110), dans lequel le dispositif de pipetage (112) est configuré pour réaliser au moins une procédure de pipetage sur le porte-échantillons (122), dans lequel l'instrument de laboratoire (110) comprend au moins une unité de capteur (128) configurée pour mesurer par gravimétrie le porte-échantillons (122), dans lequel l'unité de capteur (128) est agencée sous le compartiment (120).

2. Instrument de laboratoire (110) selon la revendication précédente, dans lequel l'instrument de laboratoire (110) comprend au moins une unité de commande (140) configurée pour recevoir et évaluer au moins un signal de capteur (142) provenant de l'unité de capteur (128) et pour fournir au moins une information au sujet de la procédure de pipetage en utilisant le signal de capteur (142).

3. Instrument de laboratoire (110) selon la revendication précédente, dans lequel l'unité de commande (140) est configurée pour exécuter au moins une action dans le cas où le signal de capteur (142) s'écarte d'une valeur attendue, dans lequel l'action comprend un ou plusieurs parmi le marquage d'un résultat dans le cas où le signal de capteur s'écarte de la valeur attendue avec un message d'erreur ou d'avertissement, l'émission d'au moins un avertissement, l'émission d'au moins une requête, dans lequel la requête comprend une insertion de plaque multipuits requise ou aucun réactif présent, ou la modification d'au moins un paramètre de processus influençant la procédure de pipetage, dans lequel le paramètre de processus est un taux de distribution de pompe.

4. Instrument de laboratoire (110) selon l'une quelconque des deux revendications précédentes, dans lequel l'unité de commande (140) est configurée pour surveiller au moins une étape de pipetage en évaluant le signal de capteur (142) provenant de l'unité de capteur (128).

5. Instrument de laboratoire (110) selon l'une quelconque des trois revendications précédentes, dans lequel l'unité de commande (140) est configurée pour déterminer la présence du porte-échantillons (122) en évaluant le signal de capteur (142) provenant de l'unité de capteur (128).

6. Instrument de laboratoire (110) selon l'une quelconque des trois revendications précédentes, dans lequel l'unité de commande (140) est configurée pour déterminer un taux de distribution de pompe pour une pompe de la tête de pipetage (114) en évaluant le signal de capteur (142) provenant de l'unité de capteur (128).

7. Instrument de laboratoire (110) selon l'une quelconque des revendications précédentes, dans lequel l'unité de capteur (128) comprend au moins un dispositif de mesure de poids (130).

8. Instrument de laboratoire (110) selon la revendication précédente, dans lequel l'unité de capteur (128) comprend au moins une balance électronique (132) telle qu'une balance fine, une balance de précision, une balance analytique, une microbalance.

9. Instrument de laboratoire (110) selon l'une quelconque des revendications précédentes, dans lequel l'unité de capteur (128) est installée de manière fixe dans l'instrument de laboratoire (110).

10. Instrument de laboratoire (110) selon l'une quelconque des revendications précédentes, dans lequel le compartiment (120) est agencé au niveau d'une station de pipetage de préparation (144), dans lequel la station de pipetage de préparation (144) est configurée pour le traitement d'échantillons, dans lequel l'unité de capteur (128) est agencée sous le compartiment (120) pour le porte-échantillons (122) au niveau de la station de pipetage de préparation (144).

11. Instrument de laboratoire (110) selon l'une quelconque des revendications précédentes, dans lequel le compartiment (120) est agencé au niveau d'une station de pipetage de plaque pour amplification et de détection (124), dans lequel la station pipetage de plaque pour amplification et de détection (124) est configurée pour préparer l'échantillon ayant passé la station de pipetage de préparation (144) pour une analyse ultérieure, dans lequel l'unité de capteur (128) est agencée sous le compartiment (120) de la station de pipetage de plaque pour amplification et de détection (124).

12. Procédé de surveillance automatique d'au moins une procédure de pipetage d'au moins un instrument de laboratoire (110) pour le traitement d'un échantillon selon l'une quelconque des revendications précédentes, dans lequel le procédé comprend les étapes suivantes :
a) réalisation d'au moins une procédure de pipetage comprenant au moins une étape de pipetage sur au moins un porte-échantillons (122) en utilisant le dispositif de pipetage (112) ;
b) mesure gravimétrique du porte-échantillons (122) en utilisant au moins une unité de capteur (128).

13. Procédé selon la revendication précédente, dans lequel le procédé comprend la réception et l'évaluation d'au moins un signal de capteur (142) provenant de l'unité de capteur (128) et la fourniture d'au moins une information au sujet de la procédure de pipetage en utilisant le signal de capteur (142) en utilisant au moins une unité de commande (140).

14. Procédé selon les revendications précédentes, dans lequel le procédé comprend, en utilisant l'unité de commande (140), l'exécution d'au moins une action dans le cas où le signal de capteur (142) s'écarte d'une valeur attendue, dans lequel l'action comprend un ou plusieurs parmi le marquage d'un résultat dans le cas où le signal de capteur s'écarte de la valeur attendue avec un message d'erreur ou d'avertissement, l'émission d'au moins un avertissement, l'émission d'au moins une requête, dans lequel la requête comprend une insertion de plaque multipuits exigée ou aucun réactif présent, ou la modification d'au moins un paramètre de processus influençant la procédure de pipetage, dans lequel le paramètre de processus est un taux de distribution de pompe.
